# FASCICULE DE BREVET EUROPEEN

(11) **EP 0 951 093 B1**
(45) Date de publication et mention de la délivrance du brevet: **02.02.2005**
(21) Numéro de dépôt: 99420057.4
(22) Date de dépôt: 04.03.1999
(51) Int. Cl.: H01R 4/24

(54) **Dispositif pour effectuer la connexion auto-dénudante d'un ou de plusieurs fils et la coupe du déchet à leur extrémité libre**
Vorrichtung zur Schneidklemmverbindung von mindestens einem Draht und zum Abschneiden der freien Enden
Device for insulation displacement connecting of at least a wire and for cutting the waste ends

(30) Priorité: 14.04.1998 FR 9804885
(43) Date de publication de la demande: 20.10.1999
(73) Titulaire: POUYET S.A., 94207 Ivry sur Seine (FR)
(72) Inventeur: Bonvallat, Pierre, 74300 Cluses (FR); Letailleur, Jean-Pierre, 74300 Cluses (FR)
(74) Mandataire: Vuillermoz, Bruno

(56) Documents cités:
- EP-A- 0 315 345
- WO-A-92/15130
- GB-A- 2 097 201
- US-A- 5 571 029

## Description

La présente invention se rapporte à un dispositif pour effectuer, en une seule manoeuvre, la connexion auto-dénudante (dite « par déplacement d'isolant » ou « I.D.C. ») d'un ou de plusieurs fils électriques ou téléphoniques et la coupe du déchet à leur extrémité libre, en aval du point de connexion.

On connaît, selon les documents EP-A-0.092.953 et EP-A-0.519.842, des dispositifs de connexion de type rotatif qui réalisent, sur un seul fil, la connexion auto-dénudante et la coupe du déchet inutile à l'extrémité libre de ce fil, par un mouvement de rotation d'un barillet qui fait partie intégrante du dispositif et que l'on fait tourner en utilisant un tournevis qui s'introduit dans une fente prévue à cet effet sur ce barillet.

Selon le document EP-A-0.092.953, le fil doit d'abord être introduit dans un orifice traversant qui fait partie du dispositif, ce qui entraîne de grosses difficultés de câblage, en particulier lorsque ces dispositifs équipent des réglettes d'interconnexion de lignes (typiquement de lignes téléphoniques ou informatiques) et que ces réglettes sont très proches les unes des autres, rendant par suite ces orifices difficilement accessibles. De plus, une telle introduction dans un nécessairement petit orifice est une opération nécessitant un certain degré d'attention, et qui engendre pour le monteur une fatigue pouvant conduire, au bout d'un certain temps de travail, à des connexions défectueuses.

Le connecteur rotatif selon le document EP-A-0.519.842 ne présente pas cet inconvénient, et est donc amélioré par rapport au précédent (qui est d'ailleurs plus ancien), car le fil à connecter est introduit, par le dessus du connecteur, dans une fente réceptrice de ce connecteur (on dit alors qu'il est « peigné » dans cette fente réceptrice). L'accessibilité est donc grandement améliorée, même si les réglettes sont très proches les unes des autres. En outre, comme il faut saisir le fil en deux endroits (l'un en amont et l'autre en aval) pour pouvoir le « peigner » dans sa fente réceptrice, on est assuré que le fil est bien totalement introduit dans cette fente, ce qui n'est pas le cas lorsque l'on doit, d'une seule main, introduire ce fil dans un orifice traversant ou borgne et que l'on a pas toujours la possibilité de voir dépasser l'extrémité de ce fil de l'autre coté.

En revanche, le connecteur selon EP-A-0.519.842, s'il est grandement amélioré sur ce point, présente quelques inconvénients :
- Il ne permet de câbler qu'un seul fil à la fois, alors qu'il serait bien plus rapide et plus logique de câbler à chaque fois, en une seule et même opération, les deux fils d'une même paire.
- Il nécessite, dans une réglette, une prise d'encombrement relativement important, comparé à celui qui est souhaité à l'heure actuelle où la compacité est une exigence absolue.
- Avec les dimensions actuellement imposées pour ce genre de connecteur rotatif, il lui est impossible de pouvoir câbler et couper des fils dont l'âme a une section supérieure à 0,6 millimètres, car l'effort à développer deviendrait trop important pour que la structure du connecteur puisse lui résister sans se déformer. Or il est actuellement souhaité, pour les installations téléphoniques en particulier, de pouvoir utiliser des fils dont le diamètre peut aller jusqu'à 0,8 millimètres. Il n'est malheureusement pas possible, pour des questions d'encombrement, de réaliser des réglettes avec des connecteurs rotatifs d'un diamètre plus important que celui adopté à l'heure actuelle.
- Il n'indique pas de moyen, animé par la rotation inverse du barillet, pour décâbler (déconnecter) le fil précédemment câblé dans le connecteur rotatif, puis le recâbler (connecter à nouveau) d'un tour de tournevis, ce qui est pourtant très commode pour effectuer des opérations de test et de dépannage.
- Il n'existe pas d'espace et de moyens suffisants pour pouvoir noyer, de manière efficace et rapide, aussi bien la partie interne du connecteur que l'extrémité coupée du fil dans un gel ou autre produit analogue d'étanchéité permettant de protéger ces éléments métalliques contre l'humidité en cas d'utilisation en extérieur.
- Il est nécessaire d'utiliser un tournevis dont l'extrémité aplatie, ou panne, est d'une largeur bien déterminée, adaptée à la largeur du barillet: si cette panne est trop étroite, on dispose d'une force de rotation insuffisante et l'on risque d'endommager le connecteur, et si à contrario cette panne est trop large, elle ne peut pas entrer dans la fente prévue sur le barillet.
- La réalisation d'un contact métallique de forme cylindrique par découpe à plat, puis enroulement, est complexe, donc onéreuse, et elle nécessite par ailleurs une quantité de matière métallique bien plus importante que celle nécessaire pour réaliser un simple contact plat, de qui renchérit encore le prix de revient du connecteur.
- La conception même de ce connecteur fait qu'il est engendré un couple important lors de la connexion du fil, spécialement s'il s'agit d'un fil de diamètre supérieur à 0,6 mm, par rotation du barillet. Ce couple a tendance à déformer la partie externe cylindrique du connecteur, ce qui peut entraîner une détérioration du dispositif de raccordement.

Comme état de la technique peut aussi être cité le document GB-A-2.097.201 qui décrit un dispositif de connexion utilisant, pour la connexion d'un fil gainé, un contact I. D. C. , un poussoir de connexion, et une lame de coupe du déchet. Avec ce dispositif, le déchet est coupé juste à la fin de l'opération de connexion par la fente auto-dénudante du contact I. D. C., et l'extrémité libre du fil reste alors en contact électrique avec la lame de coupe. Ceci est fort dommageable, en particulier en ambiance humide où des phénomènes d'électrolyse peuvent générés sur la lame de coupe alors humidifiée et toujours connectée électriquement au fil de ligne correspondant.

L'invention vise à remédier à ces inconvénients. Elle se rapporte à cet effet à un dispositif pour effectuer, en une seule manoeuvre, la connexion auto-dénudante (dite « par déplacement d'isolant » ou « I.D.C. ») d'un ou de plusieurs fils électriques ou téléphoniques et la coupe du déchet à leur extrémité, ce dispositif comprenant :
- Une embase isolante qui forme une cavité dans laquelle sont implantés les contacts I. D. C. de réception des fils électriques,
- En face de chaque contact I. D. C. et parallèle à ce dernier: une lame de coupe du déchet,
- un poussoir de connexion qui comprend des fentes latérales d'introduction des fils et qui est associé de manière télescopique à cette embase,
caractérisé en ce que cette lame de coupe est dimensionnée et positionnée de manière à être suffisamment antérieure au fond de la fente auto-dénudante du contact I. D. C. associé pour que le fil électrique arrive, lorsqu'il est totalement connecté, à distance de cette lame de coupe.

Préférentiellement, ce dispositif est conçu pour recevoir deux fils à connecter dans un même mouvement du poussoir, et il comporte alors une vis maîtresse qui est placée entre les deux couples respectifs « lame de coupe - contact I.D.C. » associés chacun à un des fils à connecter.

Préférentiellement dans ce cas, l'ensemble est symétrique par rapport au plan transversal qui passe par l'axe de cette vis et qui est orthogonal aux deux contacts I.D.C. et aux deux lames de coupe.

Préférentiellement aussi, cette embase et ce poussoir sont conçus pour former, lorsqu'ils sont refermés l'un dans l'autre, un réservoir pratiquement fermé de contention et de réserve d'un gel ou autre produit analogue d'étanchéité et de protection contre les agressions extérieures, telles que des poussières et l'humidité.

Avantageusement dans ce sens, le poussoir forme, au delà de l'espace qui reçoit chaque contact I.D.C., une poche de réserve de gel ou autre produit analogue qui surplombe et enveloppe ce contact I.D.C.

De toute façon, l'invention sera bien comprise, et ses avantages et autres caractéristiques ressortiront bien, lors de la description suivante d'un exemple non limitatif de réalisation, en référence au dessin annexé dans lequel :
- Figure 1 est une perspective éclatée, avec écorchement partiel, de ce dispositif de connexion.
- Figure 2 est une perspective partiellement écorchée de ce même dispositif, un des deux fils de la ligne à connecter étant « peigné » dans sa fente réceptrice, et le poussoir étant placé dans sa positon haute sur cette figure.
- Figures 3 et 4 sont des vues semblables à Figure 2, et montrant les deux phases suivantes de connexion du fil par vissage de la vis maîtresse.
- Figures 5, 6, et 7 sont des coupes verticales selon, respectivement, V-V de Figure 2, VI-VI de Figure 3, et VII-VII de Figure 4, montrant de même façon les trois phases de connexion d'un des deux fils de la ligne bifilaire à connecter.
- Figure 7A est une vue agrandie d'un détail de la figure 7, montrant que l'extrémité libre connectée du fil arrive en dessous de la lame de coupe.
- Figure 8 est une coupe verticale partielle, selon VIII-VIII de Figure 4, montrant bien la partie interne du poussoir et la position des deux fils de ligne connectés.
- Figures 9 et 10 sont des coupes partielles et très schématiques montrant les deux positions extrêmes de la vis maîtresse.
- Figure 11 est une vue de coté montrant, en position extrême dévissée de la vis, comment le poussoir est empêché de sortir.
- Figure 12 montre, en perspective de détail partiel et éclatée, les deux ergots et les deux lumières qui coopèrent, selon Figure 11, pour arrêter le poussoir en position haute.

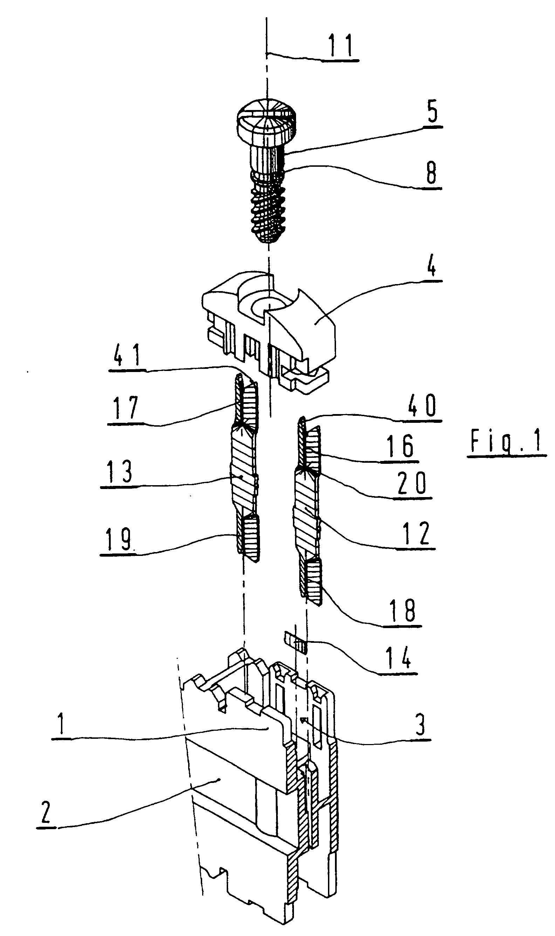

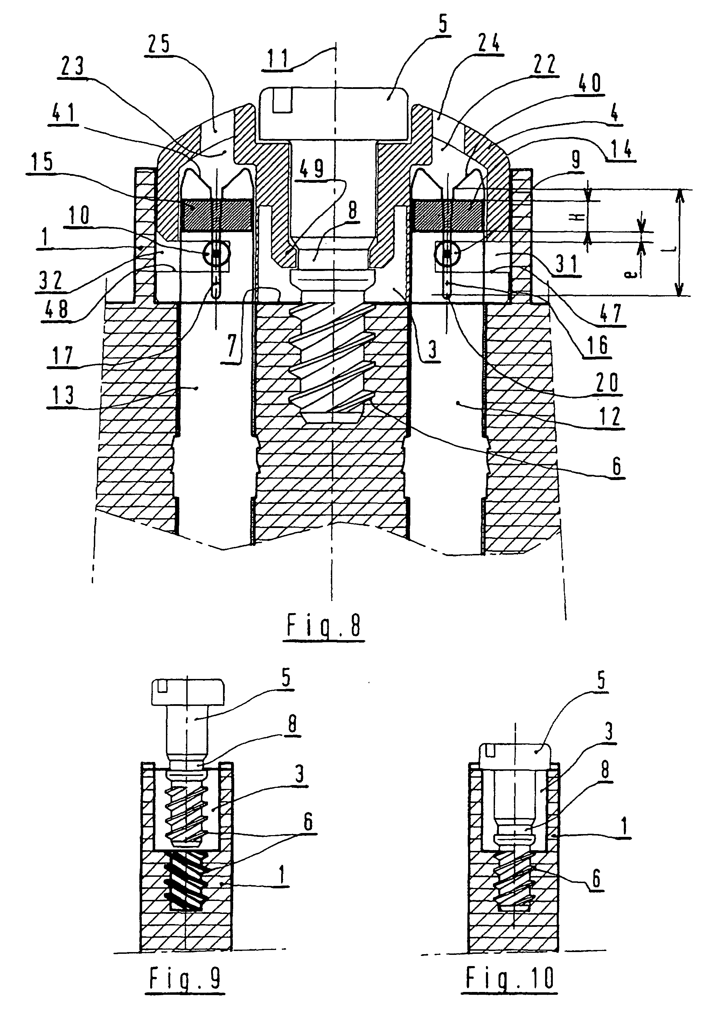

En se référant tout d'abord aux figures 1, 2, 8, 9, 11, et 12, ce dispositif de connexion comporte une embase 1, constituée typiquement par une partie du corps d'une réglette 2, par exemple une réglette de répartition ou plus typiquement de sous répartition de lignes téléphoniques ou informatiques, qui forme une cavité 3 apte à recevoir un poussoir de connexion 4, qui vient pénétrer à frottement télescopique doux dans cette cavité 3 lorsqu'il y est poussé par la rotation d'une vis maîtresse 5 qui vient se visser dans un taraudage 6 (figures 8 et 9) prévu à cet effet dans le corps de l'embase 2 et partant du fond 7 de la cavité 3.

La vis 5 est classiquement rendue imperdable grâce à une gorge 8 de retenue de cette vis, cette gorge coopérant avec des cliquets élastiques 49 du poussoir de connexion 4.

L'embase 1 renferme, dans sa cavité 3, deux contacts I.D.C. 12 et 13, avec leurs classiques chanfreins d'entrée 40, 41 et leurs classiques fentes auto-dénudantes 16, 17, ces contacts I.D.C. étant sensiblement plats et d'axes parallèles à l'axe 11 de la vis 5, ainsi que deux petites lames de coupe planes 14 et 15. Le contact 12 et la lame 14 d'une part, et le contact 13 et la lame 15 d'autre part, reçoivent respectivement les deux brins 9 et 10 (figure 8) d'une ligne bifilaire qui est par exemple une ligne d'arrivée.

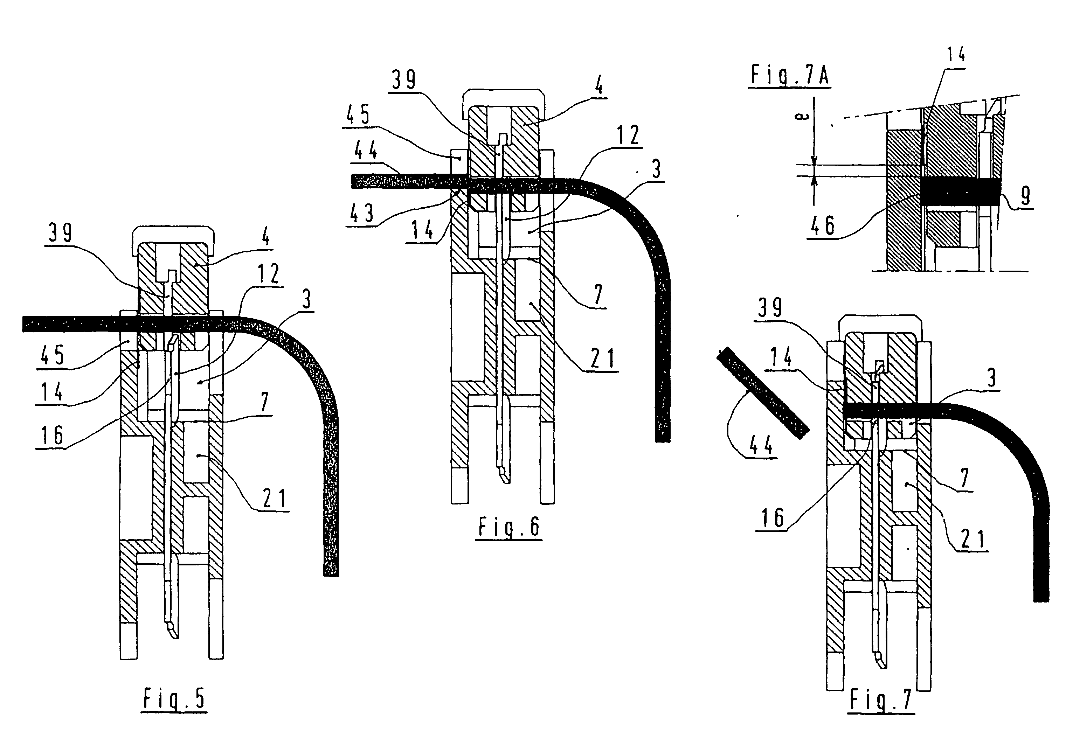

La lame de coupe 14 est parallèle au contact 12 et en vis à vis de sa fente auto-dénudante 16, la lame 14 et le contact 12 étant séparés d'une distance d'écartement de l'ordre de quelques millimètres (environ deux millimètres dans cet exemple de réalisation). Le contact I.D.C. 12 comporte à son extrémité opposée à celle de la fente 16, une autre fente auto-dénudante 18 qui est destinée à recevoir le brin ou fil électrique de ligne (la ligne de départ dans l'exemple considéré) qui est à connecter au brin ou fil électrique 9 de la ligne d'arrivée. Comme on le voit clairement sur la figure 8, la hauteur H de la lame 14 est inférieure à la longueur L de la fente 16, et cette lame de coupe 14 est positionnée de manière à être suffisamment écartée du fond 20 de la fente auto-dénudante 16 du contact I.D.C. associé 12 pour que, selon les figures 8 et 7A, le brin ou fil électrique 9 arrive, lorsqu'il est totalement connecté, à une courte distance « e » en dessous cette lame de coupe 14 (en supposant ici que le fil 9 est introduit de haut en bas comme représenté dans cet exemple).

Il en est de même en ce qui concerne l'autre contact 13, sa fente auto-dénudante 17 et sa lame de coupe associée 15, son autre fente auto-dénudante 19, tous ces éléments, qui sont relatifs à l'autre brin ou fil électrique 10 de cette ligne d'arrivée étant rigoureusement identiques à ceux relatifs au brin ou fil électrique 9 de cette ligne.

Le connecteur représenté est donc destiné à câbler simultanément les deux brins 9 et 10 (figure 8) d'une ligne bifilaire, de sorte qu'il est symétrique par rapport au plan transversal médian qui passe par l'axe 11 de la vis 5 et qui est orthogonal aux deux contacts I.D.C. 12 et 13 ainsi qu'aux deux lames de coupe 14 et 15. Comme on le voit sur le dessin, la vis maîtresse 5 est placée au milieu, entre les deux couples respectifs « lame de coupe - contact I.D.C. » associés chacun à un des deux fils 9 et 10 à connecter, de sorte que son action est bien équilibrée entre les deux parties symétriques droite/gauche qu'elle met en mouvement.

Par ailleurs, le corps isolant du poussoir 4 est conformé pour présenter, de part et d'autre de la vis maîtresse 5 comme on le voit sur le dessin, deux fentes latérales 31 et 32, qui sont coplanaires et situées dans un plan, ici horizontal et donc orthogonal aux plans des lames de coupe 14,15 et des contacts I.D.C. 12,13, et qui sont dimensionnées, en largeur et en profondeur, pour respectivement recevoir les deux brins de ligne 9 et 10, de façon qu'ils arrivent au droit des fentes auto-dénudantes respectives 16,17 des contacts I.D.C. respectifs 12 et 13. Ces deux fentes 31,32 sont ici prévues dans la partie basse du poussoir 4, et quoi qu'il en soit, elles arrivent au dessus des contacts I.D.C. 12,13 lorsque le poussoir 4 est en position haute selon les figures 4,7,9, et 11.

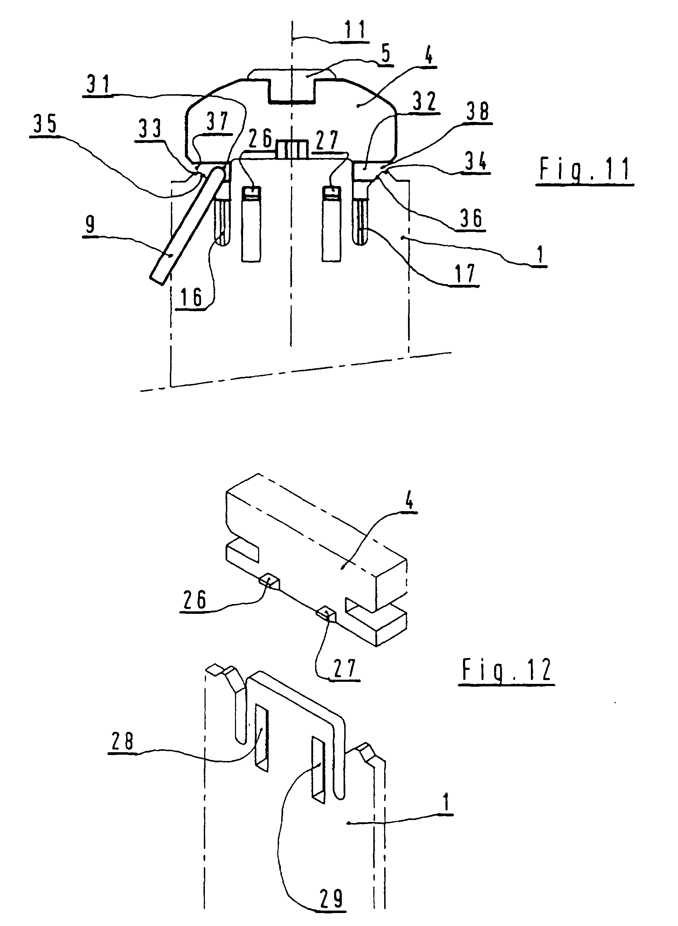

En outre, comme on le voit très bien sur la figure 11, l'embase 1 présente, sur sa tranche supérieure qui regarde en direction du poussoir 4, deux excroissances ou bourrelets 33,34 qui présentent une pente descendante 35,36 vers l'axe 11 du poussoir 4, et qui, lorsque ce poussoir est en position haute ou « dégagée au maximum », forment d'une part un rétrécissement d'entrée 37,38 pour les brins 9,10 dans leurs fentes réceptrices 31,32, ce qui les empêche d'en sortir une fois introduits, et forment d'autre part un chanfrein d'entrée de ces fils téléphoniques 9,10 vers leurs fentes auto-dénudantes respectivement associées 16 et 17.

Enfin, comme on le voit sur les figures à 7, le poussoir 4 présente, dans l'axe de chacun des contacts I.D.C. 12,13 lorsque ce poussoir est en position de chevauchement de ces contacts, deux fentes verticales respectives 39 qui sont dimensionnées pour autoriser le libre coulissement de ces contacts dans le corps isolant du poussoir lorsque celui ci, sous l'action de la vis maîtresse 5, descend en rentrant progressivement dans la cavité 3.

Il est important de noter que ce dispositif de connexion est conçu pour en outre former un réservoir pratiquement fermé de toutes part pour un gel ou autre produit analogue d'étanchéité et de protection contre les intempéries et autres agressions extérieures.

Le poussoir 4 et la cavité 3 coulissent l'un dans l'autre et ils sont conformés pour alors former à eux deux une volume interne fermé et variant selon la position de la vis 5. Ce volume est rempli de gel d'étanchéité ou autre produit analogue avant la première opération de connexion, la vis 5 étant typiquement alors, selon la figure 10, en position basse. Très avantageusement, il est prévu, dans le corps de l'embase 1 et en prolongement de la cavité 3 au delà de son fond 7 (voir la figure 5), une cavité supplémentaire 21 qui sert de réserve de gel ou autre produit analogue. En outre, il est prévu dans le poussoir 4, comme on le voit bien sur la figure 8, deux espaces respectifs 22, 23 de réception, au dessus des deux contacts I.D.C. 12 et 13, de gel d'étanchéité, ou autre produit analogue, ces espaces surplombant et enveloppant ces contacts I.D.C. : on est ainsi assuré que ces contacts I.D.C. sont alors bien noyés dans le gel ou autre produit analogue.

Comme il est indiqué en traits mixtes sur la figure 8, il est en outre possible de prévoir deux orifices de test 24 et 25 (permettant d'accéder aux contacts I.D.C. respectifs 12 et 13) dans le couvercle que constitue le poussoir 4. Ces orifices débouchent dans les espaces supérieurs 22 et 23 précités, qui sont remplis de gel ou autre produit analogue, de sorte que l'on est assuré que chaque test ne nuit pas à la protection des contacts 12 et 13 par le gel ou autre produit analogue d'étanchéité, celui ci continuant, malgré l'opération de test, à recouvrir copieusement ces contacts.

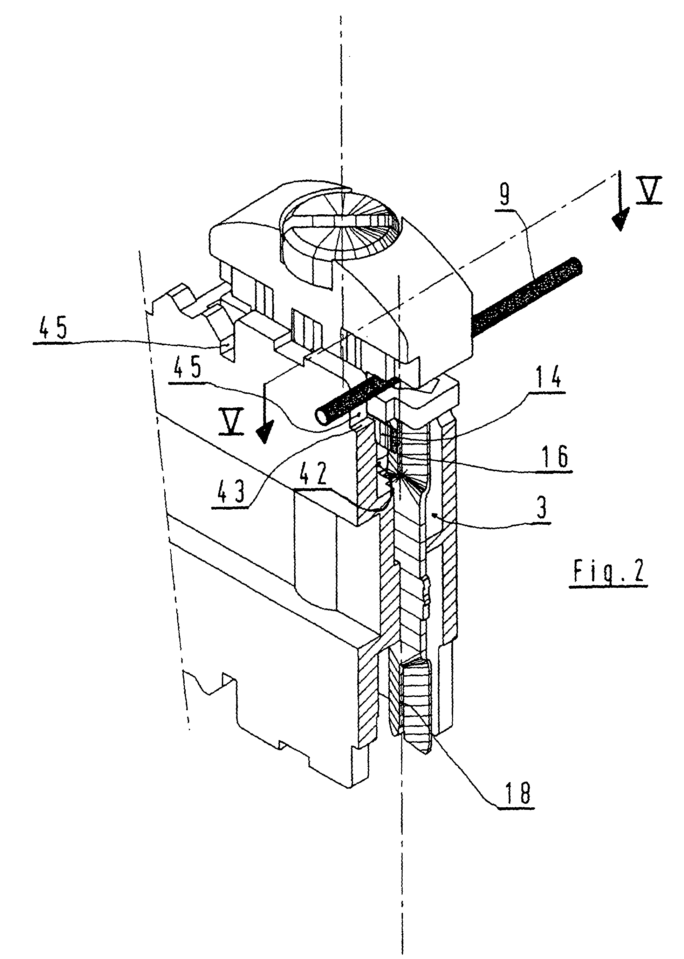

Comme on le voit sur les figures 11 et 12, le poussoir 4 est retenu dans l'embase 1, lorsque ce poussoir est éloigné au maximum de cette embase par le fait que la vis 5 est dévissée à l'extrême (ce qui correspond à la position haute selon les figures 2, 5, et 9), par la coopération de deux ergots 26 et 27 du poussoir et de deux lumières verticales conjuguées de guidage et d'arrêt 28 et 29 qui sont pratiquées dans la paroi verticale de l'embase 1. Bien entendu, le nombre d'ergots et de lumières conjuguées peut être inférieur ou supérieur à deux.

Le fonctionnement du dispositif sera maintenant expliqué en référence à l'ensemble des figures 2 à 10.

Au départ, il est supposé qu'aucun fil n'est encore connecté, et la vis 5 est en sa position basse extrême selon la figure 10. On dévisse alors cette vis 5 jusqu'à ce qu'elle soit, selon la figure 9, totalement dégagée de l'emprise du taraudage 6, les positions relatives de l'embase 1 et du poussoir 4 étant alors celles qui correspondent aux figures 2, 5, et 11.

Comme le montrent les figures 2, 5, et 11, les fils de ligne 9 et 10 (ici seul le fil 9 est représenté pour ne pas surcharger le dessin) sont introduits, ou « peignés », latéralement dans leurs fentes réceptrices respectives 31 et 32. Les bourrelets d'entrée 33 et 34 les empêchent alors de ressortir latéralement de ces fentes réceptrices, et les chanfreins 35 et 36 assurent qu'ils seront, quand on commencera à visser la vis 5, correctement dirigés vers leurs fentes auto-dénudantes respectives 16 et 17 ainsi que contre le tranchant de leurs lames de coupe respectives 14 et 15. Dans cette position de départ, les deux brins 9 et 10 sont bien entendu, de par la conformation de l'embase 1, positionnés au dessus de leurs lames de coupe respectives 14 et 15.

A noter que, s'il est exact que l'introduction des fils téléphoniques 9 et 10 dans les fentes 31 et 32 s'effectue latéralement, chaque fil n'est en réalité pas peigné latéralement en début d'opération, mais bien de bas en haut, c'est à dire « par le dessus », ce qui est plus pratique. En effet, comme mentionné précédemment, l'embase 1 fait en réalité partie d'une réglette, typiquement une réglette de répartition ou de sous répartition. Dans une telle réglette, les poussoirs 4, qui sont à section rectangulaire et allongée, forment une mosaïque, de sorte que le poussoir 4 représenté n'est séparé du poussoir voisin que par un espace, de l'ordre d'un à deux millimètres par exemple, définissant par suite un faible interstice qui constitue une fente verticale, orthogonale à la fente 31, dans laquelle on va pouvoir peigner le fil 9 en l'introduisant par le dessus de la réglette 2 jusqu'au fond de cet interstice, puis en le déplaçant alors latéralement pour le faire pénétrer, sans risque de mauvaise manoeuvre, dans sa fente réceptrice 31.

On commence alors à visser la vis 5, ce qui commence à faire descendre le poussoir 4, et les deux brins 9 et 10 qu'il emprisonne, vers la partie interne de la cavité 3.

Comme on le voit clairement sur la figure 2, la lame de coupe 14, qui est fixée sur la paroi interne 42 de la cavité 3, dépasse très légèrement (d'une fraction de millimètre pour fixer les idées) de la tranche supérieure 43 de l'embase. A cet endroit, comme représenté, cette tranche est en retrait pour définir une fente verticale 45 qui permet un bon guidage et un bon maintien du fil 9.

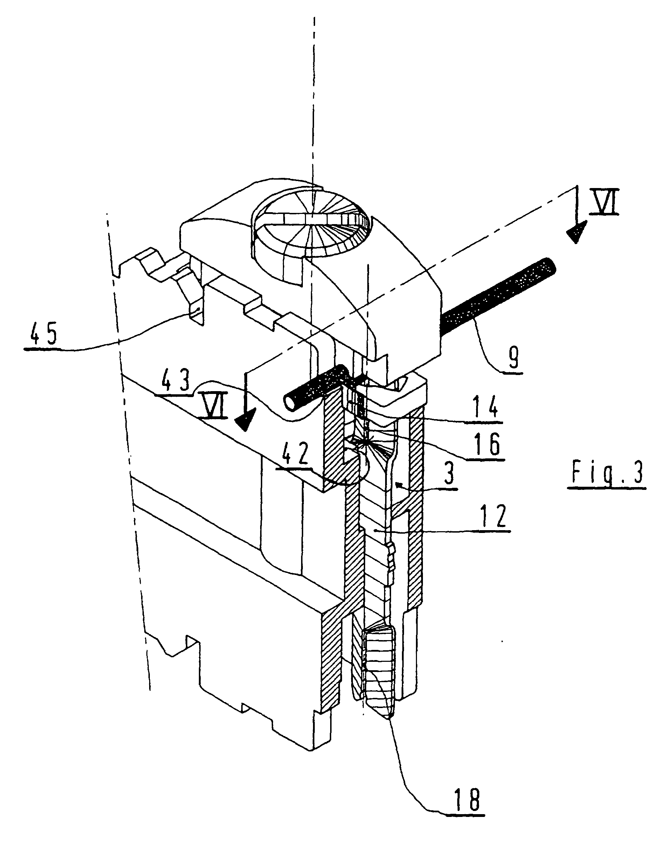

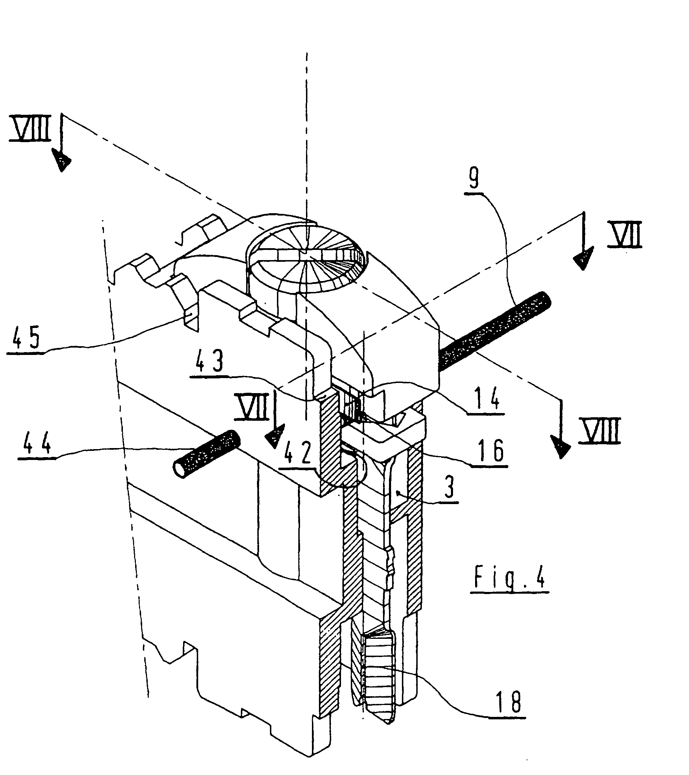

Tel que montré sur les figures 3 et 6, le fil 9 commence alors à être sectionné par la lame 14. Dans cette action de sectionnement, la partie aval extrême 44 du fil 9 est, du moins dans cet exemple de réalisation, maintenue en appui sur la tranche basse 43 précitée de l'embase 1.

Le poussoir 4 descend encore au fur et à mesure que l'on tourne la vis 5, de sorte que le fil est totalement sectionné par la lame de coupe 14 et est alors, substantiellement en fin de cette opération de sectionnement, introduit, dans la fente auto-dénudante 16 du contact I.D.C. 12, ce qui engage son opération de connexion par déplacement d'isolant. Lorsque cette action de connexion est positivement engagée, l'extrémité libre du fil 9 s'est alors dégagée de la lame de coupe 14, et arrive donc en dessous de celle-ci.

Selon les figures 4, 7, 7A, 8, et 10, on arrive en l'autre position extrême pour laquelle le brin ou fil téléphonique 9 (ainsi qu'il en est bien évidemment de même pour l'autre brin ou fil téléphonique 10) est d'une part totalement sectionné, le déchet 44 tombant par gravité à l'extérieur de la réglette, et d'autre part totalement connecté dans le contact I.D.C. 12. Dans cette position finale, le fil électrique 9 arrive à une distance « e » sous cette lame de coupe 14, et est donc électriquement isolé de cette dernière.

La démultiplication due à l'utilisation de la vis 5 permet de connecter sans problèmes des fils électriques dont l'âme conductrice est d'un diamètre qui est compris au minimum entre 0,4 et 0,8 mm.

Par ailleurs, la largeur de la panne du tournevis utilisé pour actionner la vis 5 en rotation n'est pas limitée, puisque cette panne peut déborder sans inconvénient de chaque coté de la tête de la vis 5 qui dépasse de la surface supérieure du poussoir 4.

Lors de ces opérations successives, consécutives à la descente progressive du poussoir 4, le gel ou autre produit analogue qui se trouve dans l'embase 1 est progressivement comprimé par le poussoir 4 qui descend en coulissant à frottement doux dans la cavité 3, ce qui le fait progressivement remonter vers la partie interne creuse du poussoir 4, jusqu'à en remplir les chambres supérieures 22,23 précitées. Dans son déplacement, il vient noyer copieusement les parties utiles supérieures des contacts I.D.C. 12 et 13, ainsi que les extrémités sectionnées 46 (figure 7A) des deux fils 9,10 ainsi connectés.

Il est rappelé à ce sujet que ces extrémités 46 (au bout desquelles l'âme de chaque fil est mise à nu) sont alors positionnées en dessous de la lame de coupe associée 14 ou 15, et sont donc très bien protégées par le gel ou autre produit analogue qui les enveloppe, évitant en particulier les phénomènes d'électrolyse qui pourraient prendre naissance si à contrario la lame de coupe descendait assez bas pour que sa partie métallique soit encore, en fin d'opération de connexion, en contact avec l'âme métallique du fil 9 ou 10.

Les fils 9 et 10 étant ainsi connectés, et protégés par le gel ou autre produit analogue d'étanchéité, il est alors particulièrement aisé de les déconnecter et connecter à nouveau à loisir, par exemple pour des opérations de test ou de dépannage.

Il suffit pour ceci, à partir de la position de la figure 8, de dévisser la vis maîtresse 5. Les fils 9 et 10, qui sont emprisonnés dans leurs fentes réceptrices respectives 31 et 32, sont alors très progressivement tirés vers le haut par la paroi inférieure horizontale respective 47,48 de ces fentes, de sorte qu'ils sont doucement extraits de leurs fentes auto-dénudantes respectives 16 et 17, et finalement déconnectés de leurs contacts I.D.C. 12 et 13 lorsque la vis 5 est parvenue en sa position haute de la figure 9. Il est ensuite aisé de connecter à nouveau ces fils par l'opération inverse.

Comme il va de soi, l'invention n'est pas limitée à l'exemple de réalisation qui vient d'être décrit.

C'est ainsi par exemple que ce dispositif pourrait être conformé pour ne pouvoir connecter qu'un seul fil, ou être à contrario conformé pour pouvoir connecter plus de deux fils à la fois. On pourrait par exemple, afin en particulier d'interconnecter deux paires de fils en un seul et même mouvement de descente de la vis 5, prévoir de visser l'extrémité libre de cette dernière dans un autre poussoir de connexion (associé à deux lames de coupe comme le premier) de la deuxième paire, ce poussoir étant pratiquement identique au poussoir 4, coaxial à ce dernier et placé tête-bêche par rapport à celui-ci. Il est en revanche muni du taraudage coaxial 6 de réception de la vis 5, ce taraudage 6 n'étant alors pas pratiqué dans l'embase 1, a contrario de ce que l'on voit sur les figures 8 à 10; dans cette embase, il est simplement remplacé par un orifice, coaxial et traversant, de libre passage de la vis 5. De la sorte, ce deuxième poussoir de connexion remonterait sous l'action de cette vis, en connectant cette deuxième paire tout en coupant ses deux déchets de façon similaire, tandis que le poussoir de connexion 4 descendrait et agirait comme décrit précédemment en ce qui concerne la première paire.

C'est ainsi également qu'au lieu d'être conçu pour pénétrer, par coulissement télescopique à frottement doux, à l'intérieur de la cavité 3, le poussoir 4 pourrait très bien être conçu pour que son espace interne ait des dimensions tout juste supérieures aux dimensions extérieures de l'enveloppe qui définit la cavité 3, de sorte qu'en vissant la vis 5, ce serait alors l'embase 1 qui viendrait pénétrer, à frottement télescopique doux, à l'intérieur du poussoir 4.

## Revendications

1. Dispositif pour effectuer, en une seule manoeuvre, la connexion auto-dénudante (dite « par déplacement d'isolant » ou « I.D.C. ») d'un ou de plusieurs fils électriques (9, 10) et la coupe du déchet (44) à leur extrémité libre où s'effectue la connexion, ce dispositif comprenant :
■ Une embase isolante (1) qui forme une cavité (3) dans laquelle sont implantés les contacts I. D. C. (12, 13) de réception des fils électriques (9, 10),
■ En face de chaque contact I. D. C. (12, 13) et parallèle à ce dernier : une lame de coupe (14, 15) du déchet (44),
■ un poussoir de connexion (4) qui comprend des fentes latérales (31, 32) d'introduction des fils (9, 10) et qui est associé de manière télescopique à cette embase (1),
**caractérisé en ce que** cette lame de coupe (14) est dimensionnée et positionnée de manière à être suffisamment antérieure au fond (20) de la fente auto-dénudante (16) du contact I. D. C. associé (12) pour que le fil électrique (9) arrive, lorsqu'il est totalement connecté, à distance (« e ») de cette lame de coupe (14).

2. Dispositif selon la revendication 1, **caractérisé en ce que** la hauteur (H) de la lame de coupe (14) est inférieure à la longueur (L) de la fente auto-dénudante (16) du contact I.D.C. (12) qui est associé à cette lame (14).

3. Dispositif selon l'une des revendications 1 ou 2, **caractérisé en ce que** l'embase (1) présente, respectivement pour chaque brin ou fil électrique (9,10) à connecter et sur sa tranche supérieure qui regarde en direction du poussoir (4), une excroissance ou bourrelet (33,34) qui présente une pente descendante (35,36) vers l'axe (11) du poussoir (4), et qui, lorsque ce poussoir (4) est en position haute ou « dégagée au maximum », forme d'une part un rétrécissement d'entrée (37,38) pour le fil électrique correspondant (9,10) dans sa fente réceptrice (31,32), ce qui l'empêche d'en sortir une fois introduit, et d'autre part un chanfrein d'entrée de ce brin ou fil électrique (9,10) vers sa fente auto-dénudante respectivement associée (16,17).

4. Dispositif selon l'une des revendications 1 à 3, **caractérisé en ce que** ledit poussoir de connexion (4) est déplacé progressivement par la rotation d'une vis maîtresse (5) dont l'axe (11) est parallèle à celui de ce ou ces contacts I. D. C. (12, 13).

5. Dispositif selon la revendication 4, **caractérisé en ce que** le poussoir (4) est retenu sur l'embase (1), lorsque ce poussoir (4) est éloigné au maximum de cette embase (1) par le fait que la vis (5) est dévissée à l'extrême, par la coopération d'au moins un ergot de retenue (26, 27) du poussoir et de lumière(s) verticale(s) conjuguée(s) de guidage et d'arrêt (28,29) qui sont pratiquées dans la paroi de l'embase (1).

6. Dispositif de connexion selon la revendication 4 ou la revendication 5, **caractérisé en ce qu'**il est conçu pour recevoir deux fils (9,10) à connecter dans un même mouvement du poussoir (4), et **en ce qu'**il comporte alors une vis maîtresse (5) qui est placée entre les deux couples respectifs « lame de coupe (14, 15) - contact I.D.C. (12, 13) » associés chacun à un des fils (9,10) à connecter.

7. Dispositif selon la revendication 6, **caractérisé en ce que** l'ensemble est symétrique par rapport au plan transversal qui passe par l'axe (11) de cette vis (5) et qui est orthogonal aux deux contacts I.D.C. (12,13) et aux deux lames de coupe (14,15).

8. Dispositif selon l'une des revendications 1 à 7, **caractérisé en ce que** cette embase (1) et ce poussoir (4) sont conçus pour former, lorsqu'ils sont refermés l'un dans l'autre, un réservoir pratiquement fermé de contention et de réserve d'un gel, ou autre produit analogue, d'étanchéité et de protection contre les agressions extérieures.

9. Dispositif selon la revendication 8, **caractérisé en ce que** le poussoir (4) forme, au delà de l'espace qui reçoit chaque contact I.D.C. (12,13), une poche (22,23) de réserve de gel, ou autre produit analogue, qui surplombe et enveloppe ce contact I.D.C..

10. Dispositif selon la revendication 9, **caractérisé en ce que** le poussoir est percé, au dessus de chacune de ces poches (22,23), d'un orifice de test (24,25) permettant d'accéder au contact I.D.C. correspondant (12,13).

11. Dispositif selon l'une des revendications 8 à 10, **caractérisé en ce qu'**il est prévu, dans le corps de l'embase (1) et en prolongement du fond (7) de la cavité (3), une cavité supplémentaire (21) qui sert de réserve de gel ou autre produit analogue.

12. Dispositif selon l'une des revendications 1 à 11, **caractérisé en ce que**, afin en particulier de pouvoir interconnecter, par une seule et même opération de vissage de la vis maîtresse (5), le ou les fils d'une première série (9, 10) avec le ou les fils d'une deuxième série, il est prévu, en plus dudit poussoir (4) alors affecté à la connexion autodénudante et découpe des déchets (44) des fils (9, 10) de cette première série, un deuxième poussoir qui est affecté à la connexion autodénudante et découpe des déchets des fils de cette deuxième série, ce deuxième poussoir :
■ étant associé, de façon similaire au premier poussoir (4), à des lames de coupes et contacts IDC respectifs,
■ étant coaxial au premier poussoir (4) mais placé tête-bêche par rapport à celui-ci,
■ et étant muni d'un taraudage (6) de réception de l'extrémité libre de la vis maîtresse (5), ce taraudage étant coaxial au premier poussoir (4) et étant prévu pour que le mouvement de vissage de cette vis maîtresse (5) entraîne non seulement le déplacement dans un sens du premier poussoir (4), mais encore le déplacement dans le sens opposé de ce deuxième poussoir.

## Patentansprüche

1. Vorrichtung zur in einem einzigen Vorgang zu bewerkstelligenden Durchführung der Schneidklemmverbindung ("insulation displacement connection" oder "IDC") von einem oder mehreren elektrischen Drähten (9, 10) und des Abschneidens des Abfalls (44) an deren freiem Ende, an dem die Verbindung erfolgt, wobei diese Vorrichtung Folgendes enthält:
• eine Isolierbuchse (1), welche eine Vertiefung (3) bildet, in der die die elektrischen Drähte (9, 10) aufnehmenden IDC-Kontakte (12, 13) eingesetzt sind,
• gegenüber jedem IDC-Kontakt (12, 13) und parallel dazu: ein Blatt (14, 15) zum Schneiden des Abfalls (44),
• einen Verbindungsdrücker (4) mit seitlichen Schlitzen (31, 32) für die Einführung der Drähte (9, 10), welcher ausziehbar mit dieser Buchse (1) verbunden ist,
**dadurch gekennzeichnet, dass** dieses Schneideblatt (14) derart dimensioniert und positioniert ist, dass es ausreichend weit vor dem Grund (20) des Schneidklemmschlitzes (16) des zugehörigen IDC-Kontaktes (12) angeordnet ist, damit der elektrische Draht (9), wenn er vollständig verbunden ist, in einem Abstand ("e") von diesem Schneideblatt (14) ankommt.

2. Vorrichtung nach Anspruch 1, **dadurch gekennzeichnet, dass** die Höhe (H) des Schneideblattes (14) geringer ist als die Länge (L) des Schneidklemmschlitzes (16) des diesem Schneideblatt (14) zugehörigen IDC-Kontaktes (12) ist.

3. Vorrichtung nach Anspruch 1 oder 2, **dadurch gekennzeichnet, dass** die Buchse (1) jeweils für jede zu verbindende elektrische Ader oder Draht (9, 10) und auf ihrem oberen, dem Drücker (4) zugewandten Abschnitt eine Ausstülpung oder einen Wulst (33, 34) aufweist, mit einer zur Achse (11) des Drückers (4) hin absteigenden Schräge (35, 36) aufweist, und die bzw. der, wenn dieser Drücker (4) in der oberen oder "maximal freigelegten" Stellung ist, zum einen eine Verengung (37, 38) für den Eintritt des entsprechenden elektrischen Drahts (9, 10) in dem Aufnahmeschlitz (31, 32) des Drückers (4) bildet, was ihn daran hindert, nach seiner Einführung wieder hinauszurutschen, und zum anderen eine Fase für den Eintritt dieser elektrischen Ader oder dieses elektrischen Drahtes (9, 10) zu dessen jeweils zugehörigen Schneidklemmschlitz (16, 17).

4. Vorrichtung nach einem der Ansprüche 1 bis 3, **dadurch gekennzeichnet, dass** der genannte Verbindungsdrücker (4) progressiv durch Drehung einer Hauptschraube (5), deren Achse (11) parallel zur Achse dieses oder dieser IDC-Kontakte (12, 13) verläuft, verschoben wird.

5. Vorrichtung nach Anspruch 4, **dadurch gekennzeichnet, dass** der Drücker (4) auf der Buchse (1) festgehalten wird, wenn dieser Drücker (4) deswegen von dieser Buchse (1) maximal entfernt ist, weil die Schraube (5) bis zum Äußersten abgeschraubt ist, und zwar durch das Zusammenwirken von mindestens einer Rückhaltenase (26, 27) des Drückers und von (einem) zugeordneten vertikalen Führungs- und Anschlags(loch)löchern (28, 29), welche in der Wand der Buchse (1) ausgebildet sind.

6. Verbindungsvorrichtung nach Anspruch 4 oder nach Anspruch 5, **dadurch gekennzeichnet, dass** sie ausgelegt ist, um zwei in ein und derselben Bewegung des Drückers (4) zu verbindenden Drähte (9, 10) aufzunehmen und dass sie dann eine Hauptschraube (5) aufweist, welche zwischen den zwei jeweiligen, jeweils einem der zu verbindenden Drähte (9, 10) zugehörigen Paaren "Schneideblatt (14, 15) - IDC-Kontakt (12, 13)" angeordnet ist.

7. Vorrichtung nach Anspruch 6, **dadurch gekennzeichnet, dass** die Anordnung symmetrisch zur Querebene ist, welche die Achse (11) dieser Schraube (5) durchquert und zu den zwei IDC-Kontakten (12, 13) und den zwei Schneideblättern (14, 15) orthogonal verläuft.

8. Vorrichtung nach einem der Ansprüche 1 bis 7, **dadurch gekennzeichnet, dass** diese Buchse (1) und dieser Drücker (4) ausgelegt sind um, wenn sie ineinander geschlossen sind, einen nahezu geschlossenen Rückhalte- und Vorratsspeicher für ein Gel oder ein anderes ähnliches Produkt sowie Abdichtungsspeicher und Speicher zum Schutz gegen die externen Angriffe bildet.

9. Vorrichtung nach Anspruch 8, **dadurch gekennzeichnet, dass** der Drücker (4) über den jeden IDC-Kontaktes (12, 13) aufnehmenden Raum hinaus eine Vorratstasche (22, 23) für Gel oder ein anderes ähnliches Produkt bildet, welche über diesen IDC-Kontakt überhängt und ihn umhüllt.

10. Vorrichtung nach Anspruch 9, **dadurch gekennzeichnet, dass** durch den Drücker über jeder dieser Taschen (22, 23) eine Testöffnung (24, 25) gebildet ist, welche den Zugang zum entsprechenden IDC-Kontakt (12, 13) ermöglicht.

11. Vorrichtung nach einem der Ansprüche 8 bis 10, **dadurch gekennzeichnet, dass** in dem Körper der Buchse (1) und als Verlängerung des Grundes (7) der Vertiefung (3) eine zusätzliche Vertiefung (21) vorgesehen ist, welche als Gelvorrat oder Vorrat eines ähnlichen Produktes dient.

12. Vorrichtung nach einem der Anspruche 1 bis 11, **dadurch gekennzeichnet, dass**, insbesondere um in ein und demselben Schraubvorgang der Hauptschraube (5) den Draht oder die Drähte einer ersten Reihe (9, 10) mit dem Draht oder den Drähten einer zweiten Reihe miteinander verbinden zu können, zusätzlich zu dem genannten Drücker (4), welcher dann der Schneidklemmverbindung zugeordnet ist und Abfälle (44) der Drähte (9, 10) dieser ersten Reihe abschneidet, ein zweiter Drücker vorgesehen ist, welcher der Schneidklemmverbindung zugeordnet ist und Abfälle der Drähte dieser zweiten Reihe abschneidet, wobei dieser zweite Drücker
• •ähnlich wie der erste Drücker (4) jeweiligen Schneideblättern und IDC-Kontakten zugeordnet ist,
• koaxial zum ersten Drücker (4), jedoch Kopf bei Fuß in Bezug auf diesen angeordnet ist,
• mit einem Innengewinde (6) zur Aufnahme des freien Endes der Hauptschraube (5) versehen ist, wobei dieses Innengewinde koaxial zum ersten Drücker (4) ist und vorgesehen ist, damit die Schraubbewegung dieser Hauptschraube (5) nicht nur die Verschiebung des ersten Drückers (4) in einer Richtung, sondern auch die Verschiebung dieses zweiten Drückers in der entgegengesetzten Richtung zur Folge hat.

## Claims

1. Device for making, in one manoeuvre, the self-stripping connection (called "by insulation displacing" or "I.D.C.") of one or more electrical wires (9, 10), and for cutting the scrap (44) at their end, where the connection is done, this device comprising:
- an insulating base (1) which forms a cavity (3) in which are implanted the I.D.C. contacts (12, 13) for receiving the electrical wires (9, 10),
- opposite each I.D.C. contact (12, 13) and parallel thereto: a blade (14, 15) for cutting the scrap (44),
- a connection pusher (44) which comprises lateral slots (31, 32) for introducing the wires (9, 10) and which is associated telescopically with this base (1),
**characterized in that** this cutting blade (14) is dimensioned and positioned so as to be sufficiently before the bottom (20) of the self-stripping slot (16) of the associated I.D.C. contact (12), for the electrical wire (9) to arrive, when it is totally connected, at a distance ("e") from this cutting blade (14).

2. Device according to claim 1, **characterized in that** the height (H) of the cutting blade (14) is less than the length (L) of the self-stripping slot (16) of the I.D.C. contact (12) which is associated with this blade (14).

3. Device according to any one of claims 1 or 2, **characterized in that** the base (1) presents, respectively for each electrical wire or strand (9, 10) to be connected and on its upper edge which faces the direction of the pusher (4), an extension or bead (33, 34) which presents a slope (35, 36) going down towards the axis (11) of the pusher (4), and which, when this pusher (4) is in upper position or "disengaged to a maximum", forms on the one hand, a narrowing (37, 38) for inlet of the corresponding electrical wire (9, 10) in its receiving slot (31, 32), which prevents it from going out once introduced, and, and on the other hand, a bevel for inlet of this electrical wire or strand (9, 10) towards its respectively associated self-stripping slot (16, 17).

4. Device according to any one of claims 1 to 3, **characterized in that** said connection pusher (4) is displaced progressively by the rotation of a master screw (5) whose axis (11) is parallel to that of this or these I.D.C. contacts (12, 13).

5. Device according to claim 4, **characterized in that** the pusher (4) is retained on the base (1), when this pusher (4) is spaced away to a maximum from this base (1) by the fact that the screw (5) is unscrewed to the extreme, by the cooperation of at least one retaining lug (26, 27) of the pusher with guiding and stop conjugated vertical slot(s) (28, 29), which are provided in the wall of the base (1).

6. Device according to claim 4 or claim 5, **characterized in that** it is designed to receive two wires (9, 10) to be connected in a same movement of the pusher (4), and **in that** it comprises then a master screw (5) which is placed between the two respective "cutting blade (14, 15) - I.D.C. contact (12, 13)" pairs each associated with one of the wires (9, 10) to be connected.

7. Device according to claim 6, **characterized in that** the assembly is symmetrical with respect to the transverse plane which passes through the axis (11) of this screw (5) and which is orthogonal to the two I.D.C. contacts (12, 13) and to the two cutting blades (14, 15).

8. Device according to any one of claims 1 to 7, **characterized in that** this base (1) and this pusher (4) are designed, when they are closed in each other, to form a practically closed reservoir for containing and of reserve for a gel, or other like product, for sealing and protecting against outside aggressions.

9. Device according to claim 8, **characterized in that** the pusher (4) forms, beyond the space which receives each I.D.C. contact (12, 13), a pocket (22, 23) of reserve for gel, or other like product, which overhangs and envelops this I.D.C. contact.

10. Device according to claim 9, **characterized in that** the pusher is pierced, above each of these pockets (22, 23), with a test orifice (24, 25) to allow access to the corresponding I.D.C. contact (12, 13).

11. Device according to any one of claims 8 to 10, **characterized in that** there is provided, in the body of the base (1) and in extension of the bottom (7) of the cavity (3), an additional cavity (21) which serves as reserve for gel or other like product.

12. Device according to any one of claims 1 to 11, **characterized in that**, in order in particular to be able to interconnect, in one and the same operation of screwing the master screw (5), the wire or wires of a first series (9, 10) with the wire or wires of a second series, there is provided, in addition to said pusher (4) intended then for the self-stripping connection and cut of the scraps (44) of wires (9, 10) of this first series, a second pusher which is intended for the self-stripping connection and cut of the scraps of the wires of this second series, this second pusher:
- being associated, similarly to the first pusher (4), with respective cutting blades and I.D.C. contacts,
- being coaxial to the first pusher (4) but placed head-to-tail with respect thereto,
- and being provided with a tapping (6) for receiving the free end of the master screw (5), this tapping being coaxial to the first pusher (4) and being provided so that the movement of screwing of this master screw (5) drives not only the displacement of the first pusher (4) in one direction, but also the displacement of this second pusher in the opposite direction.
